# EUROPEAN PATENT SPECIFICATION

(11) **EP 4 360 502 B1**
(45) Date of publication and mention of the grant of the patent: **03.09.2025**
(21) Application number: 23185081.9
(22) Date of filing: 12.07.2023
(51) Int. Cl.: A47B 95/04, F16B 5/12, F16B 12/26

(54) **PIECE OF FURNITURE WITH A CHANNEL PROFILE FOR COVERING THE GAP BETWEEN TWO PORTIONS OF SAID PIECE OF FURNITURE**
MÖBEL MIT EINEM RINNENPROFIL ZUR ABDECKUNG DES SPALTS ZWISCHEN ZWEI MÖBELTEILEN
MEUBLE AVEC UN PROFILÉ EN CANAL POUR COUVRIR L'ESPACE ENTRE DEUX PARTIES DU MEUBLE

(30) Priority: 28.10.2022 IT 202200022221
(43) Date of publication of application: 01.05.2024
(73) Proprietor: SCILM S.p.A., 35013 Cittadella (Prov. of Padova) (IT)
(72) Inventor: BEGHETTO, Francesco, 35013 CITTADELLA (Padova) (IT)
(74) Representative: Anselmi, Davide

(56) References cited:
- DE-U1- 8 908 817
- DE-U1- 9 406 865
- US-A- 2 681 716

## Description

### Technical field

The present invention relates to a piece of furniture comprising a channel profile having a practical function of enabling the interposition of a user's hand to open or close a door/drawer of said piece of furniture and, moreover, an aesthetic function of covering the gap between two portions of said piece of furniture such as, for example, between a part of a piece of furniture and a front of a drawer or door. Preferably, the present invention relates to "horizontal" channels, but could also be applied to "vertical" channels disposed between two furniture parts (e.g. two adjacent modules).

In particular, the invention refers to a piece of furniture comprising a channel profile made of plastic material and finished on the surface (for example with an imitation aluminium covering) so as to be aesthetically pleasing.

### Prior art

At present, the production of channel profiles for opening and closing a door or a drawer of a piece of furniture, in addition to covering the gap between two portions of a piece of furniture, i.e. the unattractive empty space present between two furniture modules (or between two drawers/doors thereof) which would allow the entry of dust or other things inside the piece of furniture, is known. Some examples are described in documents DE2363154, EP3009693, IT201600103879, DE9406865, DE8908817 and US2681716.

In other words, therefore, channel profiles perform both an aesthetic function and a dual practical function: to allow the opening or closing of a door/drawer and, moreover, to fill up any access openings in order to prevent the entry of dust or other elements inside the piece of furniture.

Generally, channel profiles comprise a main body that is substantially flat or slightly curved.

The front face, i.e. the exposed one that is in view during use, is preferably smooth for aesthetic reasons. The rear face, by contrast, has a track for a sliding block that cooperates in the connection to a fixed part that is connected to the piece of furniture. The rear face thus comprises a series of plates, also defined as bridges, which project from the main structure and have the technical purpose of creating grooves and/or projections adapted to enable coupling with specific support elements constrained beforehand to the piece of furniture where the gap is located.

Therefore, in addition to covering the empty space between the furniture modules, the profiles also serve to cover the aforesaid support elements, thus concealing them from the user's eyes.

When the profiles are made of plastic material, they show multiple surface defects on the front face where the plates or projections or bridges disposed on the rear face are located. Profiles made of plastic material, in fact, are generally produced by extrusion, a process that increases the temperature of the plastic so as to render it mouldable.

However, during cooling of the extruded profile, the different thicknesses of the plastic (the thicknesses are in fact larger where the plates are located) tend to cool and shrink differently, thereby creating optical and surface defects on the front face as well.

Therefore, in order to conceal these defects, it is necessary to carry out a veneering step that consists in applying a covering layer, which must be applied with precision, preferably with special machinery, and only at a later time after extrusion, that is, when the profile has cooled completely. All this obviously increases production times and also production costs.

Therefore, to date and above all because of the high quality demanded, manufacturers of kitchen furniture accessories avoid producing channels with plastic material for the reasons described above.

### Summary

In this context, the technical task at the basis of the present invention is to propose a piece of furniture comprising a channel profile for covering the gap between two portions of said piece of furniture which overcomes the abovementioned drawbacks of the prior art.

In particular, one object of the present invention is to provide a piece of furniture comprising a channel profile made of plastic material for opening/closing a door or a drawer and, moreover, for covering the gap between two portions of said piece of furniture that is substantially free of surface defects, at least on the front face, i.e. the face that is visible during use.

Another object of the present invention is to provide a piece of furniture comprising a channel profile for covering the gap between two portions of said piece of furniture that is easily constrainable to at least a portion of the aforesaid piece of furniture. Therefore, specifically, the invention has the object of proposing a kit for covering the gap between two portions of a piece of furniture that comprises the aforesaid channel profile and at least one support element constrainable to the piece of furniture.

The stated technical task and specified objects are substantially achieved by a piece of furniture with a channel profile for covering the gap between two portions of said piece of furniture. The dependent claims correspond to further advantageous aspects of the invention.

It should be understood that this summary introduces a selection of concepts in simplified form, which will be further expanded on in the detailed description given below.

The invention relates to a piece of furniture comprising a channel profile for covering the gap between two portions of said piece of furniture, for example two doors of a piece of furniture or two front elements of two adjacent drawers.

The profile extends along a longitudinal direction and is preferably a laminar element (similar to a lamina) that comprises a flat portion and at least one curved portion. The flat portion has an exposed front face and a rear face turned towards the gap and, moreover, has a width, measured transversely to the longitudinal direction, that is substantially commensurate with the gap between the two portions of the piece of furniture. The curved portion is disposed laterally to the flat portion relative to the longitudinal direction and, moreover, has a curvature such as to define an engagement seat, and, during use, is facing towards the piece of furniture. In addition, the engagement seat is couplable with a support element constrainable to a portion of the piece of furniture.

According to the invention, the profile is a single body made of plastic material and is moreover devoid of projecting elements, at least ones projecting from the rear face of the flat portion.

### Brief description of the drawings

Additional features and advantages of the present invention will emerge more clearly from the approximate and hence non-limiting description of a preferred, but not exclusive, embodiment of a piece of furniture comprising a channel profile and an associated kit for covering the gap between two portions of said piece of furniture, as illustrated in the appended drawings, in which:
- figure 1 illustrates, according to an exploded perspective view, a possible embodiment of the kit for covering the gap between two portions of a piece of furniture;
- figure 2 illustrates, according to a side view, the kit illustrated in figure 1 and assembled in the recess of a piece of furniture;
- figure 3 illustrates, according to a perspective view, a possible piece of furniture on which a kit for covering the gap between two portions of the same piece of furniture is installed.

With reference to the drawings, they serve solely to illustrate embodiments of the invention for the purpose of better clarifying, in combination with the description, the inventive principles at the basis of the invention.

### Detailed description of at least one embodiment

The present invention relates to a piece of furniture comprising a channel profile for covering the gap between two portions of said piece of furniture which, with reference to the figures, has generically been indicated by the number 10.

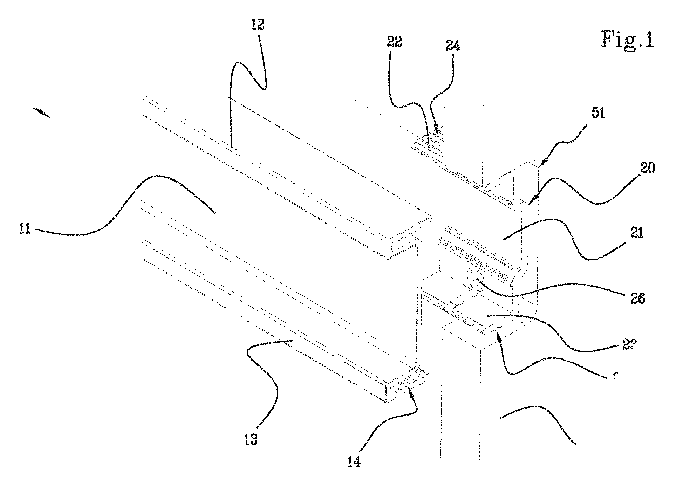

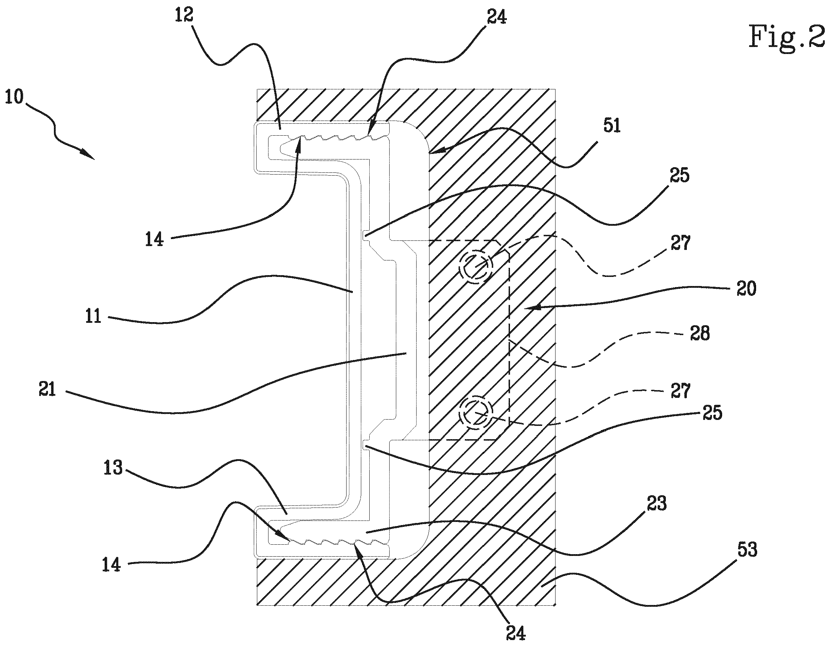

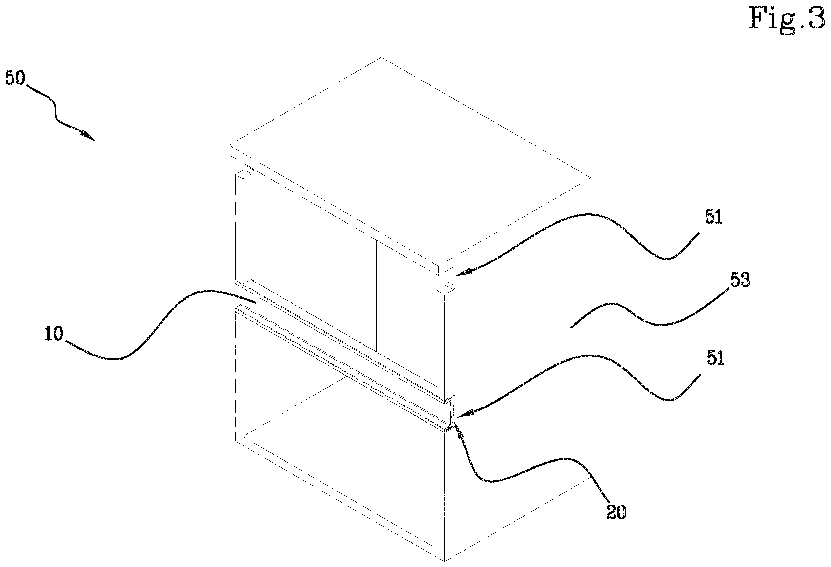

Figures 1 and 2 show a channel profile 10 for covering the gap between two portions of a piece of furniture 50. In particular, the gap that the channel profile 10 is capable of concealing could be the free space between two components of a piece of furniture, or between two adjacent ones, or else, as may be seen in figure 3, the free space between the front panels of two drawers, one above the other.

In other words, the channel profile 10 could be applied horizontally.

The profile 10 extends mainly along a longitudinal direction L and is a laminar element that comprises a flat portion 11 and at least one curved portion 12, 13.

The flat portion 11 has an exposed front face and a rear face. In addition, the flat portion 11 has a width, measured transversely to the longitudinal direction L, that is substantially commensurate with the gap between the two portions of the piece of furniture 50 or the recess fashioned on the side of the piece of furniture.

The curved portion 12, 13, by contrast, is disposed laterally/adjacent to the flat portion 11 relative to the longitudinal direction L. In addition, the curved portion 12, 13 has a curvature such as to define an engagement seat, and, during use, is facing towards the piece of furniture 50, and is couplable with a support element 20 constrainable to a portion of the piece of furniture 50.

Each curved portion 12, 13 (at least one) is shaped so as to define said respective engagement seat having a shape that is elongated according to a direction orthogonal to the plane in which the flat portion 11 lies.

Preferably, the two inner surfaces, defined by at least one of said curved portions 12, 13 having a shape folded back on itself, are parallel to each other.

In particular, the profile 10 is a single body made of plastic material and, moreover, is devoid of projecting elements, at least ones projecting from the rear face of the flat portion 11. According to the invention, the profile 10, in cross-section, has a curved and flat shape, but without the presence of projecting elements, at least ones projecting from the rear face of the flat portion 11.

In other words, the channel profile 10 made of plastic material is made substantially smooth, devoid of any projecting element such as, for example, the so-called bridges useful for enabling fastening to the piece of furniture 50. The particular shape it is moulded into, and in particular the shape of each curved portion 12, 13, nonetheless assures the presence of coupling elements for fastening to the piece of furniture 50. In this manner, therefore, the channel profile 10 is easily couplable with a support element 20 constrained beforehand to the piece of furniture 50 and, at the same time, has an aesthetically smooth line devoid of projections either on the front face (i.e. the exposed one) or the rear one.

In accordance with a preferred aspect of the invention, the flat portion 11 and the at least one curved portion 12, 13 have a substantially equal thickness.

In other words, the profile 10 may be considered a single lamina having its own thickness and extending along the longitudinal direction L for a pre-established length that is generally equivalent to the length of the gap it has to cover. In particular, the aforesaid lamina can be divided into a flat portion, i.e. the main portion substantially defining the entire front face of the profile, and at least one curved section 12, 13 which, precisely by virtue of its curvature, is capable of assuring the coupling with a support element 20 installed beforehand on the piece of furniture 50.

According to the invention, the at least one curved portion 12, 13 extends laterally to the flat portion 11, i.e. along one side of the flat portion 11 considering the longitudinal direction L along which it extends. In fact, both the flat portion 11 and the at least one curved portion 12, 13 extend parallel to the longitudinal direction L.

In accordance with another aspect of the invention, the profile 10 comprises two curved portions 12, 13 that are opposite each other relative to the flat portion 11 so that the profile 10 itself has a substantially "C" shape. In particular, each curved portion 12, 13 defines a respective engagement seat for a support element 20 or at least a part of the latter.

In other words, the profile 10 has a substantially symmetrical shape in which the flat portion 11 is interposed between two curved portions 12, 13. Therefore, the flat portion 11 defines the central body of the profile 10 and substantially the entire front face which is exposed during use of the profile 10, whereas the curved portions 12, 13 have smaller dimensions according to a front view and also define the engagement seats with which to couple the profile 10 to the support element 20 constrained beforehand to the piece of furniture 50.

In accordance with the invention, each curved portion 12, 13 has a shape folded back on itself so that it has two mutually facing inner surfaces together defining a respective engagement seat.

Advantageously, therefore, each curved portion 12, 13 is moulded in such a way as to define an engagement seat capable of receiving, preferably by snap fitting, the support element 20 or at least a part thereof. In other words, the curved portions have a clamping or gripping effect for the coupling with the support element 20.

Preferably, at least one inner face of the mutually facing surfaces of each curved portion 12, 13 has set of teeth 14 adapted to create mechanical interference with the support element 20, or at least a part thereof, to which it can be connected.

In this manner, advantageously, the insertion of the support element 20 (or at least a part thereof) is stable, since the teeth 14 are capable of increasing the holding force and thus the coupling between the aforesaid components.

Figures 1 and 2, which illustrate both the channel profile 10 and the support element 20, also show a kit for covering the gap between two portions of a piece of furniture 50, in particular between two front panels of two drawers, one above the other, or between two doors.

In particular, figure 1 illustrates the kit in a disassembled configuration, whilst figure 2 shows the kit when it is assembled. More precisely, figure 1 illustrates the kit according to an exploded perspective view, whilst figure 2 shows a side view in which the section of the portion of the piece of furniture 50 on which it is installed is also present.

Therefore, the kit comprises a channel profile 10 having any combination of the features described previously and, moreover, at least one support element 20 constrainable to a portion of the piece of furniture 50, preferably in a recess 51 of a panel of the piece of furniture 50.

Advantageously, the support element 20 has a shape couplable with that of the channel profile 10.

According to the invention, the support element 20 comprises a main body 21 constrainable to a portion of the piece of furniture 50 and at least one projecting element 22, 23 that projects from the main body 21 and is advantageously couplable to at least one curved portion 12, 13 of the profile 10.

In other words, therefore, the support element 20 has at least one projecting element that can be used to support the channel profile 10 which, as described previously, is advantageously smooth (from an aesthetic and technical viewpoint, being devoid of projections such as bridges) but shaped so as to create at least one engagement seat for the aforesaid support element 20. More precisely, as already explained, the at least one curved portion 12, 13 is shaped so as to receive a corresponding projecting element 22, 23 of the support element 20.

In other words, the projecting element 22, 23 of the support element 20 is shaped so as to be fitted inside the engagement seat. Preferably, the engagement seat and the projecting element 22, 23 are complementarily shaped.

In accordance with one aspect of the invention, the main body 21 of the support element 20 has a substantially flat shape and, during use, is parallel to the flat portion 11 of the profile 10. In particular, the projecting element 22, 23 extends transversely relative to the main body 21 and to the longitudinal direction L.

In this manner, therefore, the at least one projecting element 22, 23 extends transversely, substantially orthogonally, to the main body 21 so as to enable a mating connection with the profile 10.

Figures 1 and 2 also illustrate a further aspect of the support element 20.

In particular, the support element 20 has front openings 26 (FIG.1) obtained on the main body 21 and side openings 27 (FIG. 2) obtained on a side appendage 28 extending transversely and projectingly relative to the main body 21 (preferably, on the opposite side relative to each projecting element 22, 23).

The front openings 26 and side openings 27 are advantageously capable of accommodating respective fastening elements (not illustrated), for example screws, to enable fastening to the piece of furniture 50.

In figures 1-3, the support element 20 is fastened in a recess 51 of the piece of furniture 50 so that the channel profile 10 is positioned over the gap present between the front panels (not illustrated in figure 3 in order to make the positioning of the profile 10 clearer) of two adjacent drawers. Therefore, the support element 20 is constrained to the piece of furniture 50 by fastening to a lateral shoulder 53 thereof and, therefore, with the use of the lateral openings 27.

According to the invention, as may be seen in figures 2 and 3, the size of the recess 51 (depth, understood as orthogonally to the direction of extension L, and height according to a vertical direction) of the piece of furniture 50 enables the insertion of both the support element 20 and the profile 10.

Preferably, the support element 20 extends longitudinally along the direction L, extending along only a part (not all, but only the part in proximity to the recess 53) of said profile 10.

Advantageously, as may be seen in figure 2, the lateral appendage 28 has an extent such as to be able to maintain some free space between the main body 21 of the support element 20 and the recess 51 of the piece of furniture 50. In other words, there is some play useful for adjusting the positioning of the support element 20 relative to the recess 51 and thus to the positioning of the profile 10 relative to the piece of furniture 50.

In accordance with one aspect of the invention, the main body 21 of the support element 20 is divided into three sections. The lateral sections lie substantially in the same fictitious plane and have front openings 26 for positioning the fastening elements, whilst the central section is not aligned with the lateral ones and lies in a plane parallel to the previous one. Preferably, the central section projects along a direction opposite that of each projecting element 20. In this manner, the particular shape of the main body 21 of the support element 20 has the function of an alignment template useful for correctly positioning the support element 20 between the two adjacent modules of the piece of furniture.

Preferably, the lateral sections have a width comparable to the classic widths of the lateral shoulders of a piece of furniture to enable their correct placement one above the other and thus the correct interposition of the fastening elements.

Even more preferably (but not necessarily), as may be seen in figure 1, the extent in width of each support element 20 exceeds the usual thickness dimensions of the lateral shoulders 53 of a piece of furniture, so as to provide a larger surface for coupling with the profile 10.

In accordance with another aspect of the invention, the support element 20 comprises a pair of projecting elements 22, 23 which are opposite each other relative to main body 21 so as to lend the support element 20 a substantially "C" shape.

In other words, similarly to the profile 10, the support element 20 has a substantially symmetrical shape in which the main body 21 is interposed between a pair of projecting elements 22, 23 so as to obtain a substantially "C" shape, complementary to the shape of the profile 10 in order to enable the coupling and, therefore, the fastening of the profile 10 to the piece of furniture 50.

In accordance with a further aspect of the invention, each of the projecting elements 22, 23 has at least one respective set of teeth 24 adapted to cooperate mechanically with a respective curved portion 12, 13 of the profile 10.

The teeth 24 are advantageously capable of increasing the holding force that the projecting element 22, 23 causes inside the engagement seat defined by the respective curved portion 12, 13 and, therefore, of assuring the coupling between the aforesaid components.

Even more advantageously, the teeth 24 of each projecting element 22, 23 and the teeth 14 of the respective curved portion 12, 13 are substantially complementarily shaped so as to define a mating connection and thus make the components of the kit more solidly joined when coupled. In other words, the mechanical interference that is established between the teeth 14, 24 is such as to make the positioning of the profile 10 relative to each support element 20 very stable.

In accordance with a preferred aspect of the invention, which may be better seen in figure 2, the support element 20 has at least one steplike part 25 protruding from the main body 21. The steplike part 25 is configured to define a rear support for the flat portion 11 of the profile 10 when the profile 10 itself and the support element 20 are coupled (precisely as is illustrated in figure 2 in accordance with one possible embodiment of the invention).

Preferably, the support element 20 has a pair of steplike parts 25 symmetrically disposed relative to a fictitious centre line of the main body 21 of the support element 20.

In this manner, when the profile 10 is coupled to the support element 20, each steplike part 25 is capable of defining a resting point which, advantageously, prevents the flat portion 11 of the profile 10 from bending towards the inside of the piece of furniture 50, i.e. towards the support element 20.

Also disclosed is a process for producing a channel profile 10, preferably a channel profile 10 having any combination of the features described previously.

In particular, the process comprises the following steps:
- an extrusion step for producing said profile 10 with plastic and/or polymeric material;
- a veneering step for the surface finishing of at least one face of said profile 10 with a finishing film,
wherein veneering step is carried out simultaneously with or in immediate succession after said extrusion step in order to exploit the surface heat of the profile 10 produced during the extrusion step to fix the finishing film applied during the veneering step.

In other words, the particular shape of the channel profile 10, devoid of projections (for example bridges) is advantageously capable of enabling the extrusion and veneering steps to be carried out simultaneously or in immediate succession, since the aforesaid lack of projections considerably reduces the possibility of the appearance of surface defects (above all on the front face, the one that is exposed during use) during cooling of the profile 10.

In the plastic profiles known in the prior art, in fact, the different thicknesses due to the presence of bridges give rise (during the cooling step following extrusion) to a different shrinkage of the plastic material and the consequent formation of shadows and changes in tone (i.e. aesthetic defects), also on the face opposite the one on which the bridges are present, i.e. the front face of the profile.

In the profile 10 of the piece of furniture in accordance with the present invention, the removal of any projecting element eliminates the problem at its basis and thus renders the process of cooling and shrinkage of the plastic homogeneous over the whole surface of the profile. In other words, the possibility of the appearance of surface defects making it necessary to postpone the veneering step is considerably reduced, if not completely eliminated. In the prior art, in fact, the veneering step must necessarily be carried out after extrusion and, moreover, when the profile has completely cooled. Veneering is in fact the only way to cover the surface defects that form during the cooling step.

Thanks to the profile 10 of the piece of furniture in accordance with the present invention, by contrast, it is possible to carry out the veneering step substantially simultaneously with the extrusion step in order to exploit the surface heat of the extruded profile 10 to improve the adherence of the finishing film.

For example, the profile 10 of the piece of furniture in accordance with the present invention can be produced with a bi-extrusion apparatus advantageously configured to simultaneously perform extrusion of the plastic profile 10 and a step of producing the covering (that is, substantially, the veneering step).

## Claims

1. A piece of furniture (50), comprising:
- at least one side panel defining a side shoulder (53) having a recess (51);
- a channel profile (10) for covering the gap between two portions of the piece of furniture (50) and extending along a longitudinal direction (L);
- at least one support element (20) constrainable to a portion of the piece of furniture (50) and having a shape such as to be couplable to said profile (10), wherein said support element (20) comprises a main body (21) constrainable to a portion of the piece of furniture (50) and at least one projecting element (22, 23) that projects from said main body (21) and is couplable to said at least one curved portion (12, 13) of said profile (10); said support element (20) being fastened in said recess (51) and the size of the recess (51) is such as to allow the insertion therein of both the support element (20) and the profile (10),
said profile (10) being an element shaped like a lamina and comprising:
- a flat portion (11) having an exposed front face and a rear face; said flat portion (11) having a width, measured transversely to the longitudinal direction (L), that is substantially commensurate with the gap between the two portions of the piece of furniture (50);
- at least one curved portion (12, 13) disposed laterally to said flat portion (11) relative to said longitudinal direction (L) and having a curvature such as to define an engagement seat, which, during use, is facing towards said piece of furniture (50), and is couplable with said support element (20) constrainable to a portion of the piece of furniture (50);
wherein said profile (10) is a single body made of plastic material and is moreover devoid of projecting elements, at least ones projecting from said rear face; said curved portion (12, 13) has a shape folded back on itself so that it has two mutually facing inner surfaces together defining a respective engagement seat.

2. The piece of furniture (50) according to claim 1, wherein said flat portion (11) and said at least one curved portion (12, 13) have a substantially equal thickness.

3. The piece of furniture (50) according to claim 1 or 2, wherein said channel profile (10) comprises two curved portions (12, 13) that are opposite each other relative to said flat portion (11), so that said profile (10) has a substantially "C" shape, each curved portion (12, 13) defining a respective engagement seat for engaging said support element (20) or at least a part of the latter.

4. The piece of furniture (50) according to any one of the preceding claims, wherein at least one inner face of the mutually facing surfaces of each curved portion (12, 13) of said channel profile (10) has a set of teeth (14) adapted to create mechanical interference with the support element (20), or at least a part thereof, to which it can be connected.

5. The piece of furniture (50) according to any one of the preceding claims, wherein said curved portion (12, 13) is shaped so as to define said engagement seat having a shape that is elongated according to a direction orthogonal to the plane in which the flat portion (11) lies.

6. The piece of furniture (50) according to any one of the preceding claims, wherein said two inner surfaces defined by said curved portion (12, 13) having a shape folded back on itself are parallel to each other.

7. The piece of furniture (50) according to any one of the preceding claims, wherein said main body (21) of said at least one support element (20) has a substantially flat shape which, during use, is parallel to said flat portion (11) of said profile (10), said projecting element (22, 23) extending substantially orthogonally relative to said main body (21) and to said longitudinal direction (L).

8. The piece of furniture (50) according to any one of the preceding claims, wherein said support element (20) comprises a pair of projecting elements (22, 23) which are opposite each other relative to said main body (21), thereby lending said support element (20) a substantially "C" shape.

9. The piece of furniture (50) according to any one of the preceding claims, wherein each of said projecting elements (22, 23) has at least one respective set of teeth (24) adapted to cooperate mechanically with a respective curved portion (12, 13) of said profile (10).

10. The piece of furniture (50) according to any one of the preceding claims, wherein said support element (20) has at least one steplike part (25) protruding from said main body (21) and adapted to define a rear support for said flat portion (11) when said profile (10) and said support element (20) are coupled.

## Patentansprüche

1. Möbelstück (50), umfassend:
- mindestens eine Seitenplatte, die eine Seitenschulter (53) mit einer Aussparung (51) definiert;
- ein Rinnenprofil (10) zur Abdeckung des Spalts zwischen zwei Abschnitten des Möbelstücks (50), das sich entlang einer Längsrichtung (L) erstreckt;
- mindestens ein Stützelement (20), das an einem Abschnitt des Möbelstücks (50) festspannbar ist und eine solche Form aufweist, dass es mit dem Profil (10) koppelbar ist, wobei das Stützelement (20) einen Hauptkörper (21), der an einem Abschnitt des Möbelstücks (50) festspannbar ist, und mindestens ein vorstehendes Element (22, 23) umfasst, das aus dem Hauptkörper (21) hervorsteht und mit dem mindestens einen gekrümmten Abschnitt (12, 13) des Profils (10) koppelbar ist; wobei das Stützelement (20) in der Aussparung (51) befestigt ist und die Größe der Aussparung (51) so bemessen ist, dass das Einführen darin sowohl des Stützelements (20) als auch des Profils (10) ermöglicht wird,
wobei das Profil (10) ein Element ist, das wie eine Lamelle geformt ist und Folgendes umfasst:
- einen flachen Abschnitt (11) mit einer freiliegenden vorderen Fläche und einer hinteren Fläche; wobei der flache Abschnitt (11) eine quer zur Längsrichtung (L) gemessene Breite aufweist, die im Wesentlichen dem Spalt zwischen den beiden Abschnitten des Möbelstücks (50) entspricht;
- mindestens einen gekrümmten Abschnitt (12, 13), der seitlich zu dem flachen Abschnitt (11) relativ zu der Längsrichtung (L) angeordnet ist und eine Krümmung aufweist, um einen Eingriffssitz zu definieren, der im Gebrauch dem Möbelstück (50) hinführend zugewandt ist und mit dem Stützelement (20) koppelbar ist, das an einen Abschnitt des Möbelstücks (50) festspannbar ist;
wobei das Profil (10) ein einzelner Körper aus Kunststoffmaterial ist und darüber hinaus frei von vorstehenden Elementen ist, zumindest solchen, die von der hinteren Fläche vorstehen; der gekrümmte Abschnitt (12, 13) weist eine auf sich selbst zurückgeklappte Form auf, so dass er zwei einander zugewandte innere Oberflächen aufweist, die zusammen einen jeweiligen Eingriffssitz definieren.

2. Möbelstück (50) nach Anspruch 1, wobei der flache Abschnitt (11) und der mindestens eine gekrümmte Abschnitt (12, 13) eine im Wesentlichen gleiche Dicke aufweisen.

3. Möbelstück (50) nach Anspruch 1 oder 2, wobei das Rinnenprofil (10) zwei gekrümmte Abschnitte (12, 13) umfasst, die relativ zu dem flachen Abschnitt (11) einander gegenüberliegen, so dass das Profil (10) eine im Wesentlichen "C"-Form aufweist, wobei ein jeder gekrümmte Abschnitt (12, 13) einen jeweiligen Eingriffssitz zum Eingreifen in das Stützelement (20) oder zumindest einen Teil davon definiert.

4. Möbelstück (50) nach einem der vorhergehenden Ansprüche, wobei mindestens eine innere Fläche der einander zugewandten Oberflächen eines jeden gekrümmten Abschnitts (12, 13) des Rinnenprofils (10) einen Satz von Zähnen (14) aufweist, die dazu angepasst sind, eine mechanische Interferenz mit dem Stützelement (20) oder mindestens einem Teil davon zu erzeugen, mit dem es verbunden werden kann.

5. Möbelstück (50) nach einem der vorhergehenden Ansprüche, wobei der gekrümmte Abschnitt (12, 13) so geformt ist, dass er den Eingriffssitz mit einer Form definiert, die gemäß einer Richtung senkrecht zu der Ebene, in der der flache Abschnitt (11) liegt, verlängert ist.

6. Möbelstück (50) nach einem der vorhergehenden Ansprüche, wobei die zwei inneren Oberflächen, die durch den gekrümmten Abschnitt (12, 13) mit einer auf sich selbst zurückgeklappten Form definiert sind, parallel zueinander verlaufen.

7. Möbelstück (50) nach einem der vorhergehenden Ansprüche, wobei der Hauptkörper (21) des mindestens einen Stützelements (20) eine im Wesentlichen flache Form aufweist, die im Gebrauch parallel zu dem flachen Abschnitt (11) des Profils (10) verläuft, wobei sich das vorstehende Element (22, 23) im Wesentlichen senkrecht relativ zu dem Hauptkörper (21) und zu der Längsrichtung (L) erstreckt.

8. Möbelstück (50) nach einem der vorhergehenden Ansprüche, wobei das Stützelement (20) ein Paar von vorstehenden Elementen (22, 23) umfasst, die relativ zu dem Hauptkörper (21) einander gegenüberliegen, wodurch dem Stützelement (20) eine im Wesentlichen "C"-Form verliehen wird.

9. Möbelstück (50) nach einem der vorhergehenden Ansprüche, wobei ein jedes der vorstehenden Elemente (22, 23) mindestens einen jeweiligen Satz von Zähnen (24) aufweist, die angepasst sind, mechanisch mit einem jeweiligen gekrümmten Abschnitt (12, 13) des Profils (10) zusammenzuwirken.

10. Möbelstück (50) nach einem der vorhergehenden Ansprüche, wobei das Stützelement (20) mindestens einen stufenförmigen Teil (25) aufweist, der von dem Hauptkörper (21) hervorsteht und angepasst ist, um eine hintere Stütze für den flachen Abschnitt (11) zu definieren, wenn das Profil (10) und das Stützelement (20) gekoppelt sind.

## Revendications

1. Meuble (50), comprenant :
- au moins un panneau latéral définissant un épaulement latéral (53) comportant un renfoncement (51) ;
- un profilé en canal (10) pour couvrir l'espace entre deux parties du meuble (50) et s'étendant le long d'une direction longitudinale (L) ;
- au moins un élément de support (20) pouvant être contraint à une partie du meuble (50) et ayant une forme telle qu'il peut être couplé audit profilé (10), dans lequel ledit élément de support (20) comprend un corps principal (21) pouvant être contraint à une partie du meuble (50) et au moins un élément en saillie (22, 23) qui fait saillie à partir dudit corps principal (21) et pouvant être couplé à ladite au moins une partie incurvée (12, 13) dudit profilé (10) ; ledit élément de support (20) étant fixé dans ledit renfoncement (51) et la taille du renfoncement (51) étant telle qu'elle permet l'insertion en son sein à la fois de l'élément de support (20) et du profilé (10),
ledit profilé (10) étant un élément en forme de lamelle et comprenant :
- une partie plate (11) présentant une face avant exposée et une face arrière ; ladite partie plate (11) ayant une largeur, mesurée transversalement à la direction longitudinale (L), qui est sensiblement proportionnée à l'espace entre les deux parties du meuble (50) ;
- au moins une partie incurvée (12, 13) disposée latéralement à ladite partie plate (11) par rapport à ladite direction longitudinale (L) et ayant une courbure telle qu'elle définit un siège d'engagement qui, pendant l'utilisation, est tourné vers ledit meuble (50), et pouvant être couplé avec ledit élément de support (20) pouvant être contraint à une partie du meuble (50) ;
dans lequel ledit profilé (10) est un corps unique en matière plastique et est en outre dépourvu d'éléments saillants, au moins de ceux qui font saillie à partir de ladite face arrière ; ladite partie incurvée (12, 13) a une forme repliée sur elle-même de sorte qu'elle présente deux surfaces intérieures se faisant face mutuellement définissant ensemble un siège d'engagement respectif.

2. Meuble (50) selon la revendication 1, dans lequel ladite partie plate (11) et ladite au moins une partie incurvée (12, 13) ont une épaisseur sensiblement égale.

3. Meuble (50) selon la revendication 1 ou 2, dans lequel ledit profilé en canal (10) comprend deux parties incurvées (12, 13) étant opposées l'une à l'autre par rapport à ladite partie plate (11), de sorte que ledit profilé (10) présente une forme sensiblement en « C », chaque partie incurvée (12, 13) définissant un siège d'engagement respectif pour se mettre en prise avec ledit élément de support (20) ou au moins une partie de ce dernier.

4. Meuble (50) selon l'une quelconque des revendications précédentes, dans lequel au moins une face intérieure des surfaces se faisant mutuellement face de chaque partie incurvée (12, 13) dudit profilé en canal (10) comporte un ensemble de dents (14) adaptées pour créer une interférence mécanique avec l'élément de support (20), ou au moins une partie de celui-ci, auquel il peut être relié.

5. Meuble (50) selon l'une quelconque des revendications précédentes, dans lequel ladite partie incurvée (12, 13) est façonnée de manière à définir ledit siège d'engagement ayant une forme étant allongée selon une direction orthogonale au plan dans lequel repose la partie plate (11).

6. Meuble (50) selon l'une quelconque des revendications précédentes, dans lequel lesdites deux surfaces intérieures définies par ladite partie incurvée (12, 13) ayant une forme repliée sur elle-même sont parallèles l'une à l'autre.

7. Meuble (50) selon l'une quelconque des revendications précédentes, dans lequel ledit corps principal (21) dudit au moins un élément de support (20) a une forme sensiblement plate qui, lors de l'utilisation, est parallèle à ladite partie plate (11) dudit profilé (10), ledit élément en saillie (22, 23) s'étendant sensiblement orthogonalement par rapport audit corps principal (21) et à ladite direction longitudinale (L).

8. Meuble (50) selon l'une quelconque des revendications précédentes, dans lequel ledit élément de support (20) comprend une paire d'éléments en saillie (22, 23) qui sont opposés l'un à l'autre par rapport audit corps principal (21), conférant ainsi audit élément de support (20) une forme sensiblement en « C ».

9. Meuble (50) selon l'une quelconque des revendications précédentes, dans lequel chacun desdits éléments en saillie (22, 23) comporte au moins un ensemble respectif de dents (24) adaptées pour coopérer mécaniquement avec une partie incurvée (12, 13) respective dudit profilé (10).

10. Meuble (50) selon l'une quelconque des revendications précédentes, dans lequel ledit élément de support (20) comporte au moins une partie en escalier (25) dépassant dudit corps principal (21) et adaptée pour définir un support arrière de ladite partie plate (11) lorsque ledit profilé (10) et ledit élément de support (20) sont couplés.
